Europäisches Patentamt

European Patent Office

Office européen des brevets

(19)

(11) Veröffentlichungsnummer: **0 289 660**

**A2**

# (12) EUROPÄISCHE PATENTANMELDUNG

(21) Anmeldenummer: 87118297.8

(22) Anmeldetag: 10.12.87

(51) Int. Cl.4: **H04M 1/00 , G11B 31/00**

(30) Priorität: 02.05.87 DE 3714736

(43) Veröffentlichungstag der Anmeldung:
09.11.88 Patentblatt 88/45

(84) Benannte Vertragsstaaten:
AT BE CH DE FR GB IT LI NL

(71) Anmelder: GRUNDIG E.M.V.
Elektro-Mechanische Versuchsanstalt Max
Grundig holländ. Stiftung & Co. KG.
Kurgartenstrasse 37
D-8510 Fürth/Bay.(DE)

(72) Erfinder: Hegendörfer, Max, Dipl.-Ing.
c/o GRUNDIG E.M.V. Kurgartenstrasse 37
D-8510 Fürth(DE)

(54) **Gerät zum Empfang und zur Aufzeichnung von Satellitenrundfunksignalen.**

(57) Gerät zum Empfang und zur Aufzeichnung von Satelliten-Rundfunksignalen

Es sind einerseits Geräte zum Empfang von Satelliten-Rundfunksignalen und andererseits Magnetbandrecorder mit rotierenden Aufzeichnungs- und Wiedergabeköpfen zur Aufzeichnung von digitalen Audiosignalen bekannt. Das neue Gerät soll zum Empfang und zur Aufzeichnung von Satelliten-Rundfunksignalen mittels rotierender Köpfe geeignet sein und dem Benutzer eine Vielzahl von Programmierungsmöglichkeiten eröffnen.

Das beanspruchte Gerät enthält einen Satellitentuner zur Unwandlung eines Satelliten-Rundfunksignals in ein für eine Direktwiedergabe oder Aufzeichnung verwendbares Signal, einen Magnetbandrecorder mit rotierenden Aufzeichnungs-und Wiedergabeköpfen, eine Schaltung zur Identifikation der Programmart der empfangenen Sendung, einen Vergleicher zum Vergleich des Ausgangssignals der Identifikationsschaltung mit einem Programmart-Vorgabesignal und einen Mikrocomputer mit einer Uhr zur Steuerung des Satellitentuners und des Magnetbandrecorders.

Empfang und Aufzeichnung von Satelliten-und Kabel-Rundfunksignalen und von Tonsignalen aus einer beliebigen Quelle.

EP 0 289 660 A2

## GERÄT ZUM EMPFANG UND ZUR AUFZEICHNUNG VON SATELLITEN-RUNDFUNKSIGNALEN

Die Erfindung betrifft ein Gerät zum Empfang und zur Aufzeichnung von Satelliten-Hörrundfunksignalen.

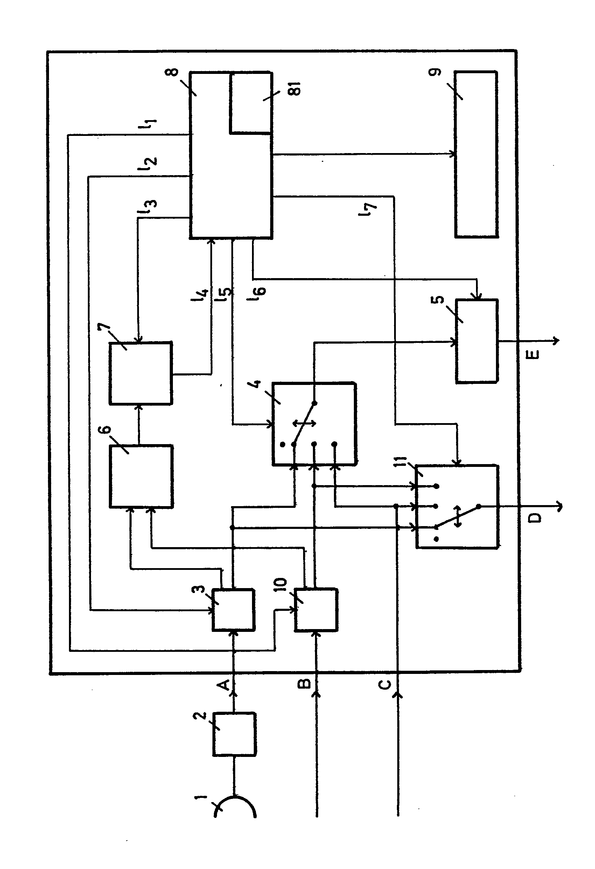

Aus der Zeitschrift "Funkschau", H.22/1986, S.28-31, ist der grundsätzliche Aufbau eines Übertragungssystems für digitale Satelliten-Rundfunksignale bekannt (siehe insbesondere Fig.4 auf S.30). Ferner zeigt die Fig.5 auf der Seite 31 des genannten Aufsatzes ein Blockschaltbild eines Satelliten-Empfängers, dessen Aufgabe im wesentlichen darin besteht, das digitale Satelliten-Rundfunksignal zu demodulieren und am Ausgang ein analoges Tonsignal zur Verfügung zu stellen, welches dann in zwei Kanäle aufgeteilt und an die daran angeschlossenen Lautsprecher weitergeleitet wird.

Weiterhin ist aus der Zeitschrift "Funkschau", H.7/1987, S.28-31, ein Magnetbandrecorder mit rotierenden Aufzeichnungs-und Wiedergabeköpfen zur Aufzeichnung von digitalen Audiosignalen bekannt. Hierzu werden die analogen Eingangssignale digitalisiert, einer Reed-Solomon-Codierung und einer Verschachtelung unterworfen, um auf der Wiedergabeseite Bündel-und Zufallsfehler korrigieren zu können, moduliert und mittels der rotierenden Aufzeichnungsköpfe in Schrägspuren eines Magnetbandes aufgezeichnet.

Die Erfindung geht von der Erkenntnis aus, daß es zu einer qualitativ hochwertigen Aufzeichnung von ebenfalls qualitativ hochwertigen digitalen Satelliten-Hörrundfunksignalen wünschenswert wäre, einen Satelliten-Hörrundfunkempfänger mit einem Magnetbandrecorder mit rotierenden Aufzeichnungs-und Wiedergabeköpfen Zu kombinieren. Ihr liegt die Aufgabe zugrunde, einen konkreten Vorschlag für eine Vorteilhafte Ausgestaltung eines derartigen Kombinationsgerätes anzugeben, welches dem Benutzer insbesondere eine Vielzahl von Programmiermöglichkeiten zur Aufzeichnung von Satelliten-Hörrundfunksendungen eröffnet.

Diese Aufgabe wird durch die im Anspruch 1 angegebenen Merkmale gelöst. Vorteilhafte Weiterbildungen ergeben sich aus den Unteransprüchen.

Die Vorteile der Erfindung liegen insbesondere darin, daß beim beanspruchten Gerät die empfangenen qualitativ hochwertigen Satelliten-Hörrundfunksignale ohne wesentliche Qualitätsverluste komfortabel magnetisch aufgezeichnet werden können und so dem Benutzer in hoher Qualität für eine zeitversetzte, gegebenenfalls mehrmalige Wiedergabe zur Verfügung stehen. Ferner ist aufgrund des benutzerfreundlichen Bediensystems sichergestellt, daß stets nur die vom Benutzer gewünschten Senderbeiträge aufgezeichnet werden. Gemäß einer vorteilhaften Weiterbildung kann das beanspruchte Gerät auch Kabel-Rundfunksignale und analoge Tonsignale aus einer beliebigen Tonquelle empfangen und aufzeichnen. Weitere vorteilhafte Eigenschaften ergeben sich aus einem Ausführungsbeispiel, welches im folgenden anhand der (einzigen) Figur näher erläutert wird.

Das in der Figur gezeigte Gerät weist Eingänge A,B und C auf. Am Eingang A liegt ein von einer Satellitenantenne 1 empfangenes und von einer Außeneinheit 2 in einen Frequenzbereich von ca. 1 GHz umgesetztes digitales Satelliten-Hörrundfunksignal an. Dem Eingang B wird ein über eine Kabel-Verteilstrecke übertragenes Satelliten-Rundfunksignal zugeführt, das in einer Frequenzlage von ca. 118 MHz am Eingang B des gezeichneten Gerätes anliegt. Ferner besitzt das gezeigte Gerät einen Eingang C, über den analoge Tonsignale von einer beliebigen externen Tonquelle empfangen werden können.

Das am Eingang A anliegende Signal wird einem Satellitentuner 3 zugeführt, der das digitale 1 GHz-Signal in grundsätzlich bekannter Weise in ein analoges NF-Tonsignal umwandelt. Dieses gelangt an einen von einem Mikrocomputer 8 über eine Leitung $I_5$ gesteuerten Schalter 4 und an einen vom Mikrocomputer 8 über eine Leitung $I_7$ gesteuerten Schalter 11.

Das Ausgangssignal des Schalters 11 wird an einem Ausgang D des Gerätes zur Verfügung gestellt und kann von dort aus über eine (nicht gezeichnete) Verstärkeranlage wiedergegeben werden. Das Ausgangssignal des Schalters 4 wird einem Magnetbandrecorder 5 mit rotierenden Aufzeichnungs-und Wiedergabeköpfen zugeführt. Dieser Magnetbandrecorder wird über eine Leitung $I_6$ vom Mikrocomputer 8 gesteuert. Das Ausgangssignal des Magnetbandrecorders 5 wird über einen Ausgang E des Gerätes ausgegeben.

Es ist zwar grundsätzlich auch denkbar, die Ausgänge D und E zu einem einzigen Ausgang zusammenzufassen. Dies hätte aber den Nachteil, daß das direkt empfangene und das magnetisch aufgezeichnete Signal nicht gleichzeitig über verschiedene Verstärkeranlagen wiedergegeben werden könnten.

Das am Eingang B anliegende Signal wird einem Kabeltuner 10 zugeführt, der das über Kabel übertragene 118 MHz-Signal in ein analoges NF-Tonsignal umwandelt. Dies wird dann in ähnlicher Weise weiterverarbeitet wie das Ausgangssignal des Satellitentuners 3.

Zusätzlich kann über den Eingang B auch UKW-Stereo-Hörrundfunk im üblichen FM-Format eingespeist werden. In diesem Fall müßte die Schaltung 10 zusätzlich einen Standard-UKW-FM-Tuner enthalten.

Das am Eingang C anliegende analoge Tonsignal wird direkt den Schaltern 4 und 11 Zugeführt und dann in ähnlicher Weise weiterverarbeitet wie das Ausgangssignal des Satellitentuners 3 und das Ausgangssignal des Kabeltuners 10.

Im folgenden werden die Programmiermöglichkeiten des gezeigten Gerätes näher beschrieben.

Die gewünschten Programmierdaten werden über eine Programmiertastatur 81, welche entweder am Gerät selbst angeordnet oder Bestandteil eines Fernbedienungsgebers ist, eingegeben. Dieser Eingabevorgang erfolgt in Form eines Dialoges. Der Benutzer teilt dem Mikrocomputer 8 des Gerätes durch Betätigung einer dafür vorgesehenen Taste der Tastatur 81 mit, daß er programmieren möchte. Der Mikrocomputer zeigt dem Benutzer durch Darstellung des Schriftzuges "QUELLE?" auf der Anzeige 9 an, daß er auf die Eingabe der gewünschten Signalquelle wartet.

Der Benutzer kann nun entweder die gewünschte Signalquelle angeben oder eine Sondertaste betätigen und damit zum Ausdruck bringen, daß alle angeschlossenen Signalquellen für die Aufzeichnung in Frage kommen sollen. Anschließend zeigt der Mikrocomputer dem Benutzer durch Darstellung des Schriftzuges "KANAL?" an, daß er auf die Spezifizierung des Kanals der aufzuzeichnenden Sendung wartet. Der Benutzer gibt nun entweder mittels der Zifferntasten die Nummer des gewünschten Kanals ein oder teilt dem Mikrocomputer durch, Betätigung der Sondertaste mit, daß kein bestimmter Kanal bezeichnet werden soll.

Im nächsten Schritt wird durch Darstellung des Schriftzuges "PROGRAMMART?" die Eingabe der Art des aufzuzeichnenden Programmes erwartet. Hierzu kann der Benutzer entweder mittels der Zifferntasten die Nummer der gewünschten Programmart eingeben (so Z.B. "1 für Nachrichten, "4" für Sport, "6" für Kindersendung, "11" für Unterhaltungsmusik, usw.) oder die bereits oben genannte Sondertaste betätigen, um dem Mikrocomputer 8 mitzuteilen, daß die Aufzeichnung auf keine bestimmte Programmart eingeschränkt werden soll.

In den nächsten Schritten wird durch Darstellung des Schriftzuges "TAG?" die Eingabe des gewünschten Aufzeichnungstages, durch Darstellung des Schriftzuges "START?" die Eingabe der Startzeit und durch Darstellung des Schriftzuges "ENDE?" die Eingabe der Endzeit angefordert. Auch bei diesen Schritten kann der Benutzer durch Betätigung der Sondertaste dem Mikrocomputer mitteilen, daß kein bestimmter Tag bzw. keine bestimmte Start-bzw. Endzeit angegeben werden soll.

Durch die eingegebene Start-und/oder Endzeit kann - je nachdem ob ein bestimmter Kanal bezeichnet wurde oder nicht und ob eine bestimmte Programmart bezeichnet wurde oder nicht - ein mögliches oder ein tatsächliches Aufzeichnungsintervall angegeben werden.

Wird beispielsweise ein bestimmter Kanal bezeichnet und eine bestimmte Start-und eine Endzeit eingegeben, so entspricht der spezifizierte Zeitraum dem tatsächlichen Aufzeichnungsintervall.

Wird hingegen zusätzlich eine bestimmte Programmart bezeichnet, so wird durch den spezifizierten Zeitraum ein mögliches Aufzeichnungsintervall beschrieben, innerhalb dessen sämtliche im bezeichneten Kanal übertragenen Sendungen der vorgegebenen Programmart aufgezeichnet werden. So ist beispielsweise möglich, an einem bestimmten Nachmittag sämtliche im Kanal 1 übertragenen Kindersendungen automatisch aufzuzeichnen, usw.

Ferner ist es beispielsweise möglich, in sämtlichen Kanälen aller zur Verfügung stehenden Programmquellen nach einer bestimmten Programmart zu suchen. Dies geschieht, indem der Mikrocomputer 8 über die Leitungen $l_1$ und $l_2$ Steuersignale an den Satellitentuner 3 bzw. den Kabeltuner 10 ausgibt, die bewirken, daß nacheinander stichprobenartig die in allen Kanälen übertragenen Sendungen auf ihre Programmart hin überprüft werden. Hierzu wird ein beispielsweise im Satellitentuner 3 aus dem digitalen Satelliten-Rundfunksignal abgeleitetes Programmart-Kennsignal einer Schaltung 6 zur Identifikation der Programmart der momentan empfangenen Sendung zugeführt. Die Schaltung 6 stellt ein Ausgangssignal zur Verfügung, welches einem Vergleicher 7 zugeführt und dort mit einem für die eingegebene Programmart charakteristischen, dem Vergleicher 7 über die Leitung $l_3$ zugeführten Signal verglichen wird. Das Vergleichsergebnis wird über eine Leitung $l_4$ dem Mikrocomputer 8 gemeldet, der bei Positivem Vergleichsergebnis über eine Leitung $l_5$ den Schalter 4 für das Ausgangssignal des Satellitentuners 3 durchlässig und über die Leitung $l_6$ das Magnetbandgerät 5 zur Aufzeichnung der Sendung einschaltet. Bei negativem Vergleichsergebnis wird über die Leitung $l_2$ der nächste Kanal des Satellitentuners 3 angewählt und die Programmart der dort übertragenen Sendung überprüft, usw.

Der Mikrocomputer 8 besitzt ferner eine (nicht gezeichnete) Uhr. Die von dieser Uhr gelieferte Echtzeit wird in grundsätzlich bekannter Weise mit der einprogrammierten Start-und Endzeit verglichen. Damit können in Abhängigkeit von der jeweiligen Programmierung der Satellitentuner 3, der Kabeltuner 10, der Vergleicher 7, die Schalter 4 und 11 sowie der Magnetbandrecorder 5 in gewünschter Weise aktiviert und deaktiviert werden.

Selbstverständlich ist mittels der Tastatur auch eine manuelle Aufzeichnungssteuerung möglich.

Das beschriebene Gerät, bei dem der Satellitentuner 3 und der Magnetbandrecorder 5 vorzugsweise in einem einzigen Gehäuse untergebracht sind, eröffnet dem Benutzer damit eine Vielzahl von Programmierungsmöglichkeiten, aus denen er von Fall zu Fall eine geeignete auswählen kann. Durch die beschriebene Benutzerführung in Form eines Dialoges sind trotz der Vielzahl der Programmiermöglichkeiten Programmierfehler nahezu ausgeschlossen.

Bei einem anderen (nicht gezeichneten) Ausführungsbeispiel ist das Empfangsteil (Satellitentuner, Kabeltuner) vom Aufzeichnungs- und Steuerteil (Recorder und Mikrocomputer) örtlich getrennt. In diesem Fall müssen folgende Verbindungen zwischen Empfangs-und Aufzeichnungs-/steuerteil hergestellt werden:
- eine Steuerleitung vom Aufzeichnungs-/steuerteil zum Empfangsteil zur Übertragung eines Steuersignals zur Signalquellenauswahl und Stationsumschaltung bzw. Ein-und Standby-Schaltung der Signalquelle,
- eine Informationsleitung vom Empfangsteil zum Aufzeichnungs-/steuerteil zur Übertragung des Programmart-Kennsignals und
- eine Leitung bzw. Leitungen zur Nutzsignalübertragung.

Bei einem weiteren (nicht gezeichneten) Ausführungsbeispiel wird im Satellitentuner 3 bzw. im Kabeltuner 10 keine Digital/Analogwandlung des Signals vorgenommen. Folglich wird das empfangene digitale und gegebenenfalls verschachtelte Signal in digitaler Form über den Schalter 4 an das Aufzeichnungsgerät 5 weitergegeben. In diesem Fall könnte im Aufzeichnungsgerät die Analog/Digitalwandlung und die Verschachtelung des Signals entfallen.

Bei einem weiteren (nicht gezeichneten) Ausführungsbeispiel enthält das beanspruchte Gerät zusätzliche Empfangsteile wie beispielsweise einen zweiten Satellitentuner. Damit ist es möglich, eine über einen Kanal übertragene Sendung mittels des Magnetbandrecorders 5 aufzuzeichnen und gleichzeitig eine über einen anderen Kanal übertragene Sendung direkt wiederzugeben.

## Ansprüche

1. Gerät zum Empfang und zur Aufzeichnung von Satelliten-Hörrundfunksignalen mit
- einem Satellitentuner (3) zur Umwandlung eines von einer Satellitenantenne (1) abgeleiteten digitalen Satelliten-Hörrundfunksignals in ein für eine Direktwiedergabe oder Aufzeichnung verwendbares Signal,
- einem Magnetbandrecorder (5) mit rotierenden Aufzeichnungs-und Wiedergabeköpfen zur Aufzeichnung des Signals in digitaler Form,
- einer Schaltung (6) zur Identifikation der Programmart der empfangenen Satelliten-Hörrundfunksendung,
- einem Vergleicher (7) zum Vergleich des Ausgangssignals der Schaltung (6) mit einem Programmart-Vorgabesignal, und
- einem Mikrocomputer (8) mit einer Uhr zur Steuerung des Satellitentuners (3) und des Magnetbandrecorders (5).

2. Gerät nach Anspruch 1 mit drei Eingängen (A,B,C), dessen erstem ein digitales Satelliten-Hörrundfunksignal, dessen zweiten ein Kabel-Rundfunksignal und dessen dritten ein analoges Tonsignal zugeführt wird, und einem vom Mikrocomputer (8) gesteuerten Schalter (4) zur Weiterleitung eines der drei Eingangssignale.

3. Gerät nach Anspruch 2 mit einem Kabeltuner (10) zur Umwandlung eines dem zweiten Eingang (B) zugeführten digitalen Kabel-Rundfunksignals in ein für Direktwiedergabe oder Aufzeichnung verwendbares Signal und einer Leitung ($l_7$), auf der das Ausgangssignal des Kabeltuners (10) der Schaltung (6) zur Identifikation der Programmart des Kabel-Rundfunksignals zugeführt wird.

4. Gerät nach einem der vorhergehenden Ansprüche mit einer Eingabetastatur (81) zur Programmierung einer oder mehrerer automatischer Aufzeichnungen oder zur manuellen Steuerung von Aufzeichnungen.

5. Gerät nach Anspruch 4, bei dem die Eingabetastatur Bestandteil eines Fernbedienungsgebers ist und welches weiterhin einen Fernbedienungsempfänger aufweist.

6. Gerät nach einem der vorhergehenden Ansprüche, bei dem der Satellitentuner (3) und der Magnetbandrecorder (5) in einem einzigen Gehäuse angeordnet sind.

7. Gerät nach einem der vorhergehenden Ansprüche mit zwei Ausgängen (D und E), an deren erstem (D) das direkt empfangene und an deren zweitem (E) das Ausgangssignal des Magnetbandrecorders (5) zur Verfügung steht.

8. Gerät nach einem der vorhergehenden Ansprüche mit einem zusätzlichen Satellitentuner.

9. Gerät nach einem der vorhergehenden Ansprüche mit einem zusätzlichen Kabeltuner.

0 289 660